# EUROPÄISCHE PATENTSCHRIFT

(11) **EP 1 606 599 B1**
(45) Veröffentlichungstag und Bekanntmachung des Hinweises auf die Patenterteilung: **08.11.2006**
(21) Anmeldenummer: 04719915.3
(22) Anmeldetag: 12.03.2004
(51) Int. Cl.: G01L 7/04, G01K 5/36, B23K 33/00

(54) **FEDERELASTISCHES MESSELEMENT MIT FLACHEM, VERSCHWEISSBAREM VERBINDUNGSELEMENT**
SPRING-ELASTIC MEASURING ELEMENT COMPRISING A FLAT CONNECTING ELEMENT THAT CAN BE WELDED
ELEMENT DE MESURE PRESENTANT L'ELASTICITE D'UN RESSORT, POURVU D'UN ELEMENT DE LIAISON PLAT SOUDABLE

(30) Priorität: 27.03.2003 DE 10313986
(43) Veröffentlichungstag der Anmeldung: 21.12.2005
(73) Patentinhaber: Armaturenbau GmbH, 46487 Wesel-Ginderich (DE)
(72) Erfinder: RADAU, Otto, 47475 Kamp-Lintfort (DE)
(74) Vertreter: Menges, Rolf
(86) Internationale Anmeldenummer: PCT/DE2004/000512
(87) Internationale Veröffentlichungsnummer: WO 2004/085983

(56) Entgegenhaltungen:
- DE-C- 142 208
- DE-C- 733 480
- US-A- 2 299 542
- US-A- 4 615 219

## Beschreibung

Die Erfindung betrifft ein federelastisches Messelement, insbesondere für Thermometer, Druckschalter oder Manometer, bestehend aus einem bogen- oder schraubenförmigen Messrohr, welches einenends mit einem Grundkörper und anderenends mit einem Anschlusselement für das Messwerk verbunden, insbesondere verschweißt, ist.

Für Druck oder Temperatur empfindliche Messgeräte wird ein elastisches Federelement aus einem dünnwandigen Werkstoff verwendet, welches sich in Folge der vorhandenen Druckeinwirkung verformen kann. Das Messelement ist hierbei in der Regel bogenförmig ausgebildet und mit einem Ende mit einem stabilen Grundkörper und mit einem weiteren Ende über eine Schubstange mit dem Messwerk verbunden, sodass durch die eintretende Verformung eine geringe Krafteinwirkung über die Schubstange auf das Messwerk ausgeübt wird und in Folge dessen über das Messwerk die entstehende Schubkraft in eine Drehbewegung auf ein Zeigerelement übertragen wird. Der Grundkörper trägt hierbei sowohl das Messwerk als auch das federelastische Messelement und dient im Weiteren zum Anschluss einer Druckleitung, sodass der Grundkörper gegenüber dem eigentlichen Messelement formstabil ausgebildet sein muss. Beispielsweise wird der Grundkörper über einen vorhandenen Gewindeanschluss mit der Druckzuleitung verschraubt und muss daher entsprechend groß dimensioniert und gegenüber Verformungen verwindungssteif ausgebildet sein. Auf einer Seiten- oder Kopffläche des Grundkörpers wird hierbei das eigentliche Messwerk mit dem Grundkörper befestigt und über eine Schubstange die endseitig am Messelement auftretende Spannung auf das Messwerk übertragen. Anderenends ist das Messelement mit dem Zuführungskanal des Druckanschlusses verbunden, sodass das Druckmedium in das federelastische Messelement gelangt. Hierbei kann das Messelement direkt oder über ein Rohrstück mit dem Zuführungskanal verbunden sein.

Dadurch, dass der Grundkörper relativ kompakt ausgebildet ist und es sich bei dem Messelement um ein dünnwandiges, rundes oder ovales Rohr handelt, besteht die Notwendigkeit einen gasdichten verschweißten Übergang herzustellen. Hierzu besteht beispielsweise die Möglichkeit, einen ausgefrästen Schlitz im Grundkörper vorzusehen, der eine direkte Verbindung zum Kanal des Druckmittels aufweist und nach Einfügen des Messelements mit diesem verschweißt wird. Diese Ausführung ist durch große Spalten und Hohlräume zwischen Grundkörper und Messfeder gekennzeichnet und daher nur für eine Handschweißung geeignet. Eine andere Ausführungsvariante besteht aus einer Federaufnahme im Grundkörper mit zwei gefrästen Schweißkanten, sodass schmale dünne Stege im Grundkörper bestehen bleiben, die mit dem Messelement verschweißt werden können. Diese Ausführungsvariante erleichtert zwar das Handschweißen, ist jedoch beim maschinellen Schweißen nur bedingt einsetzbar, da in Folge des hohen Wärmeeintrags das dünnwandige Messelement häufig beschädigt wird. Eine weitere bekannte Ausführungsform geht von einer auf dem Grundkörper aufgeschweißten Blechkappe aus, über die das Messelement geschoben und mit der Blechkappe verschweißt wird, wobei die Blechkappe zuvor mit dem Grundkörper verschweißt ist. Da die Messfedern der verschiedenen Messbereiche unterschiedliche Abmessungen aufweisen, können hierbei größere Spalte nicht vermieden werden und dies verhindert ein einwandfreies gasdichtes und maschinelles Schweißen ohne Schweißdrahtzufuhr. Ferner wurde festgestellt, dass in Folge des hohen Wärmeeintrags zur Verschweißung des Messelements mit dem Grundkörper die entstehenden Oxydschichten im Bereich der Schweißnähte bis ins Messsystem gelangen, wobei unter anderem durch den nicht unerheblichen Wärmeeintrag eine Gefügeveränderung in der Wärmeeinflusszone entsteht, wodurch die Festigkeits- und Korrosionsbeständigkeit des federelastischen Messelements nachteilig beeinflusst wird. Ebenso wird eine Poren- und Heißrissbildung und eine Materialentmischung bei den bekannten Schweißverfahren beobachtet, die zur Keimzelle von Korrosions- und Schwingungsrissen führen kann. Soweit die Verschweißungen von Hand durchgeführt werden müssen, ist in Folge der unterschiedlichen Materialdicken diese Arbeit nur durch erfahrene Handschweißer möglich, die zudem über eine gewisse Berufserfahrung verfügen müssen und in der Regel nicht sofort durch andere Kollegen ausgetauscht werden können, sodass bei Fluktuation infolge von Krankheit oder Urlaub erhebliche Beeinträchtigungen entstehen.

In der US-Patentschrift US A 2,299,542 wird ein Verfahren zur Herstellung eines Manometers unter Verwendung einer Bourdonfeder offenbart. Das wiederkehrende Problem, eine sehr empfindliche Bourdonfeder an einem soliden Sockel zu befestigen, wobei die Befestigung dauerhaft und druckfest sein soll, wird hierbei berücksichtigt. Zur Lösung des Problems, dass die empfindliche Bourdonfeder beim Löten oder Verschweißen an der Schweißstelle Schaden nehmen könnte, beziehungsweise, dass die Verbindung das Material in der unmittelbaren Umgebung der Verbindungsstelle geschwächt wird, wird dadurch gelöst, dass ein den Hohlkörper der Bourdonfeder umgebender aufgeweiteter Bördelrand verwendet wird, um einen Flansch auszubilden, mit dessen Hilfe die Bourdonfeder an dem festen Sockel befestigt wird. Bei der Ausbildung von gebördelten Flanschen neigen die meisten Materialien aber zu Brüchen, sodass dieses Verfahren nicht für alle Materialien einsetzbar ist.

Die deutsche Patentschrift DE 733 480 C offenbart ein Verfahren zur Verbindung einer Bourdonfeder mit einem Sockel unter Verwendung eines über die Bourdonfeder geschobenen Rohrstückes. Dabei wird ein kurzes Rohrstück über das Ende der Bourdonfeder geschoben und die Bourdonfeder wird mit dem übergestülpten Rohrstück formschlüssig am gemeinsamen Endpunkt miteinander verlötet. Die Bourdonfeder mit darüber gestülpter Hülse wird in eine Ausnehmung des Sockels hineingeschoben und die Verbindung mit dem Sockel wird über Löten oder Schweißen zwischen dem übergestülpten Rohrstück und dem Sockel erreicht. Bei dieser Lösung bilden sich bei Ausdehnung der Bourdonfeder Linienkontakte zwischen Hülse und dem offenen Ende der Bourdonfeder, sodass die Bourdonfeder dort Schaden nehmen kann. Auch lässt sich diese Ausführungsform nur schlecht automatisiert herstellen.

Der vorliegenden Erfindung liegt daher die Aufgabe zugrunde, ein federelastisches Messelement aufzuzeigen sowie hierzu ein Verfahren anzugeben, bei dem ein nur geringer Wärmeübertrag erforderlich ist und gegebenenfalls eine vollautomatische Verschweißung möglich ist.

Erfindungsgemäß ist zur Lösung der Aufgabe vorgesehen, dass die Verbindung zwischen Messrohr und Grundkörper und/oder Anschlusselement mittelbar durch ein verschweißbares Verbindungselement erfolgt, welches als Einzelteil durch eine Schweißnaht mit dem Messrohr verbunden ist, wobei die Schweißnaht durch das Verbindungselement hindurch zu den Stirnflächen des Messrohres reicht und wobei der überstehende Randbereich des Verbindungselementes mittels einer zweiten Schweißnaht mit dem Grundkörper oder Anschlusselement verbunden ist. Weitere vorteilhafte Ausgestaltungen sind den abhängigen Ansprüchen zu entnehmen.

Durch die Verwendung eines verschweißbaren Verbindungselements zwischen Messrohr und Grundkörper einerseits und Messrohr und Anschlusselement andererseits, können die spezifischen Eigenschaften der verwendeten Materialien und Wandstärken wesentlich besser berücksichtigt werden, als dies nach den herkömmlichen Methoden möglich ist. Das Verbindungselement wird hierbei an die Geometrie des Messelements insoweit angepasst, und zwar hinsichtlich deren Abmessung als auch den vorhandenen Wandstärken, dass annähernd gleiche Wandstärken ausgebildet sind und in Folge der Wärmeeinwirkung eine wesentlich günstigere schweißtechnische Verbindung geschaffen werden kann, ohne dass sich die zu verbindenden Komponenten verformen können. Zudem entstehen keine großen Oxydschichten an den Schweißnähten und verringern demzufolge auch die Oxydbildung im Messsystem. Durch die geringe Wärmeeinwirkung im Bereich der Schweißnaht entstehen darüber hinaus nur geringe Gefügeveränderungen in der Wärmeeinflusszone und es tritt kein Verzundern und Überhitzen des Schmelzbades auf, sodass eine Porenbildung und Heißrissbildung vermieden wird. Somit findet insbesondere keine Materialentmischung statt, die sonst zur Keimzelle von Korrosion- und Schwingungsrissen werden kann. Einbrandkerben in den Schweißnahtübergängen oder konstruktionsbedingte Spalten der zusammen gefügten Bauteile werden ebenso vermieden. Eine Verunreinigung des Messsystems durch Bürsten, Strahlen oder Trennschleifen kann vorteilhafter Weise ebenso ausgeschlossen werden. Vorteilhaft ist bei dem gewählten Schweißverfahren auch, dass sehr hohe Schweißgeschwindigkeiten erreicht werden, die höher liegen als die Wärmeleitung des zu verschweißenden Werkstoffes. Dies hat Auswirkungen auf die Erstarrungscharakteristik im Werkstoff. Ein für Kurzzeitmetallurgie typisches Erstarrungsverhalten ermöglicht es, die Ausscheidung intermetallischer Phasen beim Schweißen artfremder Legierungen wie Kupfer und Stahl deutlich zu unterdrücken und damit bessere mechanischtechnologischen Eigenschaften zu erreichen. Somit können jetzt auch Werkstoffkombinationen verschweißt werden (Cr Ni-Stahl mit Bronze) die bisher nur durch Lötverfahren verbunden werden konnten.

In besonders vorteilhafter Weise kann hierbei die Schweißnaht unter Verwendung eines Verbindungselements vollautomatisch durch einen Schweißroboter durchgeführt werden, sodass produktionstechnisch ein hoher Qualitätsstandard gleichbleibend gehalten werden kann. Darüber hinaus ist durch die maschinelle Fertigung eine wesentlich höhere Produktionsrate erzielbar.

In einer Ausführungsform ist hierbei vorgesehen, dass das Verbindungselement flach- und dünnwandig als Einzelteil ausgebildet ist und sowohl mit dem Messrohr als auch dem Grundkörper einerseits und dem Anschlusselement andererseits verbunden werden kann, wobei in weiterer Ausgestaltung der Erfindung eine erste Schweißnaht zwischen Verbindungselement und Messrohr durch das Verbindungselement hindurch mit der Stirnfläche des Messrohres erfolgt. Anschließend erfolgt die Herstellung einer zweiten Schweißnaht zwischen Verbindungselement und Grundkörper oder Anschlusselement.

Bei der Ausführungsvariante ist insbesondere vorgesehen, dass das Verbindungselement an den Querschnitt des Messrohrs insoweit angepasst ist, das zumindest teilweise ein überstehender, vorzugsweise umlaufender, Rand ausgebildet ist. Der Rand dient zum Verschweißen mit dem Grundkörper oder dem weiteren Anschlusselement, wenn das Verbindungselement zuvor mit dem Messrohr verschweißt ist. Vorzugsweise erfolgt die Verbindung zwischen Verbindungselement und Messrohr durch eine einzelne Schweißnaht, beispielsweise durch eine Laser- oder Elektronenstrahlschweißung, während mit einer zweiten Schweißnaht der Randbereich mit dem Grundkörper beziehungsweise Anschlusselement verbunden wird. Insofern entstehen zwei räumlich getrennt voneinander verlaufende Schweißnähte bei der Ausführungsform mit einem einzelnen Verbindungselement, die zu nur einem äußerst geringen Wärmeeintrag für die einzelnen Schweißvorgänge führen und die bereits aufgeführten Vorteile für das erfindungsgemäße federelastische Messelement sicherstellen. Das Verbindungselement muss daher nicht zwingend aus dem gleichen Material wie der Grundkörper bestehen, es kann beispielsweise ein Schweißzusatzwerkstoff oder ein anderes Material verwendet werden, sodass eine weitere Einflussnahme auf das Schweißgefüge möglich ist. Vorzugsweise erfolgt die Herstellung der Schweißnähte durch Laser- oder Elektronenstrahleinwirkung, welche gleichzeitig eine vollautomatische Fertigung mit gleichbleibend hoher Qualität ermöglicht.

Durch die einfache Fixierung und Montage der Bauteile und insbesondere durch die einfache Geometrie und Toleranzgenauigkeit der Bauteile kann daher ein vollautomatischer, vorzugsweise maschinelles Schweißverfahren angewendet werden. Bedingt durch den Laser- oder Elektronenstrahleinsatz ist eine schonende Verschweißung mit einer geringen Wärmeeinbringung in der Wärmeeinflusszone möglich und besonders günstig, wobei die genannten Vorteile für das Metallgefüge des Messrohrs eintreten, wodurch wiederum die Messeigenschaften und die Lebenserwartung des Messrohrs begünstigt wird. Ebenso tritt eine verbesserte Korrosionsbeständigkeit des Messrohrs und der Schweißnähte auf, sodass die Standzeit des federelastischen Messelements verbessert wird.

Zur Lösung der Verfahrensaufgabe zur Herstellung einer Verbindung zwischen einem Messrohr und einem Grundkörper und/oder Anschlusselement wird eine Schweißverbindung vorgeschlagen, die als Einzelteil durch eine Schweißnaht mit dem Messrohr verbunden wird, wobei die Schweißnaht durch das Verbindungselement hindurch mit den Stirnflächen des Messrohrs erfolgt und wobei der überstehende Randbereich des Verbindungselementes mittels einer zweiten Schweißnaht mit dem Grundkörper und/oder Anschlusselement verbunden wird. Das aufgezeigte Verfahren eignet sich in besonders vorteilhafter Weise zum vollautomatischen Verschweißen der federelastischen Messelementkomponenten, sodass einerseits eine gleichbleibende Qualität erzielbar ist und andererseits eine rationale Fertigungsmöglichkeit besteht. Soweit ein Verbindungselement als Einzelteil verwendet wird, können die notwendigen Schweißnähte räumlich voneinander getrennt verlaufen.

Der besondere Vorteil des erfindungsgemäßen Verfahrens liegt darin, dass in Folge der geringen Wandstärke, welche vorzugsweise an die Wandstärke des Messrohrs angepasst sind, nur geringe Wärmeüberträge erforderlich sind, um eine Schweißverbindung herzustellen. Ein Verziehen des Werkstückes, insbesondere des Messrohrs, kann insofern ausgeschlossen werden und ebenso durch den geringen Wärmeeintrag eine Verschmutzung durch Oxydschichten innerhalb des Messrohrs. Besonders vorteilhaft ist der geringe Wärmeeintrag für das Entstehen von Fehlstellen oder Porenbildung, sodass Keimzellen von Korrosions- und Schwingungsrissen vermieden werden und damit die Lebensdauer und Standzeit des gefertigten federelastischen Messelementes wesentlich erhöht wird. Durch die eingetretene Qualitätsverbesserung bei gleichzeitig rationaler Fertigungsweise entstehen somit wesentliche Vorteile gegenüber bisherigen Fertigungsmethoden.

Die Erfindung wird im Weiteren anhand der Figuren näher erläutert.

Es zeigt
- Figur 1: eine Seitenansicht eines federelastischen Messelements mit einem geschnittenen Messrohr,
- Figur 2: eine Seitenansicht des Grundkörpers mit verbundenen Messrohr,
- Figur 3: in einer geschnittenen und vergrößerten Seitenansicht die Verbindung zwischen Verbindungselement und Messrohr einerseits sowie Grundkörper andererseits und
- Figur 4: in einer geschnittenen und vergrößerten Seitenansicht die Verbindung des Messrohrs mit einem Anschlusselement.

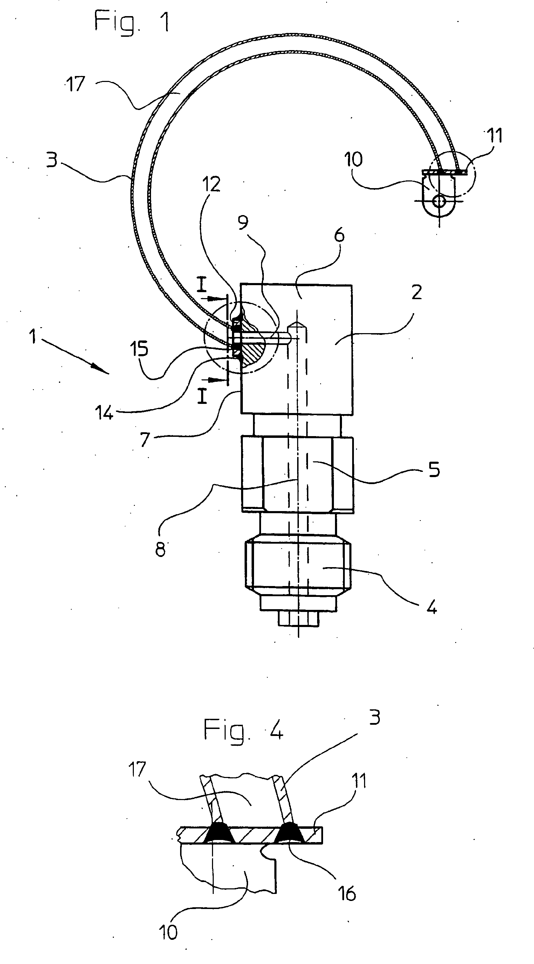

Figur 1 zeigt ein erfindungsgemäßes federelastisches Messelement 1, bestehend aus einem Grundkörper 2, einem Messrohr 3 sowie einem nicht dargestellten Messwerk. Der Grundkörper 2 besteht aus einem Vierkantkörper mit einem einseitig ausgebildeten Gewindeanschluss 4, einem Mittelteil 5 sowie einem Kopfteil 6, das zumindest eine Planfläche 7 aufweist. Im gezeigten Ausführungsbeispiel handelt es sich um einen Grundkörper mit quadratischem Querschnitt. In Axialrichtung des Grundkörpers 2 ist eine bis in das Kopfteil 6 reichende Längsbohrung 8 vorgesehen, welche über eine Querbohrung 9 in die Planfläche 7 mündet.

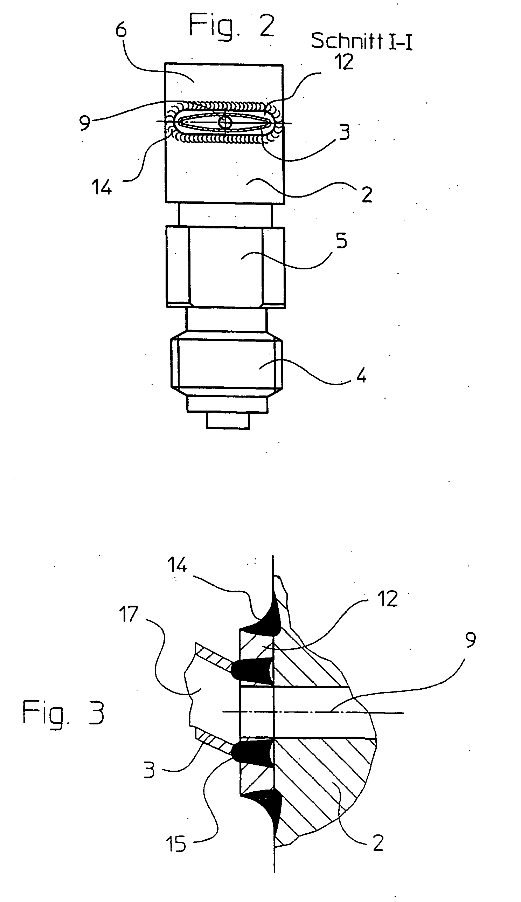

Das Messrohr 3 ist bogenförmig ausgebildet und mit einem Ende mit dem Grundkörper 2 und mit dem anderen Ende mit einem Verbindungsschenkel 10 verbunden. Zwischen Verbindungsschenkel 10 und Messrohr 3 ist ein erstes Verbindungselement 11 angeordnet und zwischen Grundkörper 2 und Messrohr 3 ein zweites Verbindungselement 12, welche annähernd gleiche Wandstärke wie das Messrohr 3 aufweisen. Zur Verringerung des Wärmeübertrags mit einer nur geringen Beeinflussung der Wärmeeinflusszone wird das dünnwandige Verbindungselement 11, 12 verwendet, welches zunächst nur mit dem Messrohr 3 verschweißt wird. Die Schweißung, wie in Figur 3 beziehungsweise 4 im Detail näher dargestellt, wird vorzugsweise durch das Verbindungselement 11, 12 hindurch mit der Stirnfläche des Messrohrs 3 vorgenommen. Anschließend erfolgt eine Fixierung des Messrohrs 3 mit Verbindungselement 12 gegenüber dem Grundkörper 2, sodass der überstehende Rand des Verbindungselements 12 mit dem Grundkörper verschweißt werden kann. Durch die einfache Fixierung und Montage der Bauteile und insbesondere durch die einfache Geometrie und Toleranzgenauigkeit der Bauteile kann daher ein vollautomatisiertes vorzugsweise maschinelles Laser- oder Elektronenstrahl Schweißverfahren angewendet werden. Bedingt durch den Laser- oder Elektronenstrahleinsatz ist die schonende, geringe Wärmeeinbringung in der Wärmeeinflusszone besonders günstig für das Metallgefüge des Messrohrs, das wiederum begünstigt die Messeigenschaften und die Lebenserwartung des Messrohrs, wie auch eine wesentlich verbesserte Korrosionsbeständigkeit des Messrohrs und der Schweißnähte 14, 15, 16.

An das Verbindungselement 11 wird hierbei ein Verbindungsschenkel 10 zuvor oder nach erfolgter Verbindung mit dem Messrohr 3 angeschweißt, sodass über den Verbindungsschenkel 10 eine Ankopplung an das nicht dargestellte Messwerk erfolgen kann. Unter Druck kann das Medium somit über die Längsbohrung 8 und Querbohrung 9 in den Innenraum 17 des Messrohrs 3 gelangen und führt in Folge der Druckeinwirkung zu einer Verformung des bogenförmigen Messrohrs 3. Eine geringe Verformung des Messrohrs bewirkt über die Schubstange eine unmittelbare Krafteinwirkung auf das Messwerk und damit auf ein Zeigerwerk.

Figur 2 zeigt in einer weiteren Seitenansicht den Grundkörper 2 mit dem geschnittenen Messrohr 3 gemäß der Schnittlinie I-I.

Figur 3 zeigt in einer vergrößerten, geschnittenen Teilansicht den Übergang vom Grundkörper 2 auf das Messrohr 3 mit den beiden Schweißnähten 14, 15. Aus dieser vergrößerten Ansicht wird deutlich, dass die beiden Schweißnähte 14, 15 getrennt voneinander gezogen werden, und zwar zunächst durch das Verbindungselement 12 hindurch mit der Stirnfläche des Messrohrs 3 und anschließend erfolgt die Verbindung des Verbindungselements 12 mit dem Grundkörper 2 durch die Schweißnaht 14.

Figur 4 zeigt ebenfalls in einer vergrößerten, geschnittenen Teilansicht das gegenüberliegende Ende des Messrohrs 3 mit einem Verbindungselement 11, welches wiederum durch das Verbindungselement 11 hindurch mit der Stirnfläche des Messrohrs 3 durch eine Schweißnaht 16 verbunden ist. An das Verbindungselement 11 ist der Verbindungsschenkel 10 angeformt oder angeschweißt.

### Bezugszeichenliste

- 1: Federelastisches Messelement
- 2: Grundkörper
- 3: Messrohr
- 4: Gewindeanschluss
- 5: Mittelteil
- 6: Kopfteil
- 7: Planfläche
- 8: Längsbohrung
- 9: Querbohrung
- 10: Verbindungsschenkel
- 11: Verbindungselement
- 12: Verbindungselement
- 14: Schweißnaht
- 15: Schweißnaht
- 16: Schweißnaht
- 17: Innenraum

## Patentansprüche

1. Federelastisches Messelement (1), insbesondere für Thermometer, Druckschalter oder Manometer, bestehend aus einem bogen- oder schraubenförmigen Messrohr (3), welches einenends mit einem Grundkörper (2) und anderenends mit einem Anschlusselement (10) für das Messwerk verbunden, insbesondere verschweißt, ist,
**dadurch gekennzeichnet,**
**dass** die Verbindung zwischen Messrohr (3) und Grundkörper (2) und/oder Anschlusselement (10) mittelbar durch ein verschweißbares Verbindungselement (11, 12) erfolgt, welches als Einzelteil durch eine Schweissnaht mit dem Messrohr (3) verbunden ist, wobei die Schweissnaht (15,16) durch das Verbindungselement (11,12) hindurch zu den Stirnflächen des Messrohres (3) reicht und wobei der überstehende Randbereich des Verbindungselementes (11,12) mittels einer zweiten Schweissnaht (14) mit dem Grundkörper (2) oder Anschlusselement verbunden ist.

2. Federelastisches Messelement nach Anspruch 1,
**dadurch gekennzeichnet,**
**dass** das Verbindungselement (11, 12) flach und dünnwandig als Einzelteil ausgebildet ist.

3. Federelastisches Messelement nach Anspruch 1 oder 2,
**dadurch gekennzeichnet,**
**dass** das Verbindungselement (11, 12) an den Querschnitt des Messrohrs (3) insoweit angepasst ist, dass zumindest teilweise ein überstehender, vorzugsweise umlaufender, Rand ausgebildet ist.

4. Federelastisches Messelement nach einem oder mehren der Ansprüche 1, 2 oder 3,
**dadurch gekennzeichnet,**
**dass** das Verbindungselement (11, 12) durch eine Schweißnaht (15, 16) mit dem Messrohr (3) einerseits und mit einer zweiten Schweißnaht (14) mit dem Grundkörper (2) oder Anschlusselement andererseits verbunden ist.

5. Federelastisches Messelement nach einem oder mehreren der Ansprüche 1 bis 4,
**dadurch gekennzeichnet,**
**dass** zwei räumlich getrennt voneinander verlaufende Schweißnähte (14, 15 ,16) vorhanden sind.

6. Federelastisches Messelement nach einem oder mehreren der Ansprüche 1 bis 5,
**dadurch gekennzeichnet,**
**dass** das Verbindungselement (11, 12) aus dem gleichen Material wie der Grundkörper (2) oder aus einem Schweißzusatzwerkstoff besteht.

7. Federelastisches Messelement nach einem oder mehreren der Ansprüche 1 bis 6,
**dadurch gekennzeichnet,**
**dass** die Schweißnähte (14, 15, 16) durch Laser- oder Elektronenstrahleinwirkung herstellbar sind.

8. Verfahren zur Herstellung einer Verbindung zwischen einem Messrohr (3) und einem Grundkörper (2) und/oder Anschlusselement eines federelastischen Messelements (1) nach einem der Ansprüche 1 bis 7,
**gekennzeichnet durch**
die Verwendung eines verschweissbaren Verbindungselements (11, 12), welches als Einzelteil **durch** eine Schweißnaht, beispielsweise Laserschweiß- oder Elektronenstrahlschweißnaht, mit dem Messrohr (3) verbunden wird, wobei die Schweißnaht (15, 16) **durch** das Verbindungselement (11, 12) hindurch mit den Stirnflächen des Messrohres (3) erfolgt und wobei der überstehende Randbereich des Verbindungselementes (11, 12) mittels einer zweiten Schweißnaht (14) mit dem Grundkörper (2) oder Anschlusselement verbunden wird.

9. Verfahren nach Anspruch 8,
**gekennzeichnet durch**
zwei räumlich voneinander getrennt verlaufende Schweißnähte (14, 15, 16).

## Claims

1. Resiliently elastic measuring element (1), in particular for a thermometer, pressure switch or manometer, comprising an arcuate or helical measuring tube (3) which is connected, in particular welded, at one end to a base body (2) and at the other end to an attaching element (10) for the measuring equipment,
**characterized**
**in that** the measuring tube (3) is connected to the base body (2) and/or the attaching element (10) indirectly by means of a weldable connecting element (11, 12) which, as a separate part, is connected to the measuring tube (3) by means of a weld seam, the weld seam (15, 16) extending through the connecting element (11, 12) to the end faces of the measuring tube (3), and the projecting edge region of the connecting element (11, 12) being connected to the base body (2) or attaching element by means of a second weld seam (14).

2. Resiliently elastic measuring element according to Claim 1,
**characterized**
**in that** the connecting element (11, 12) is formed as a flat, thin-walled separate part.

3. Resiliently elastic measuring element according to Claim 1 or 2,
**characterized**
**in that** the connecting element (11, 12) is matched to the cross section of the measuring tube (3) to such an extent that a projecting, preferably continuously encircling rim is at least partially formed.

4. Resiliently elastic measuring element according to one or more of Claims 1, 2 or 3,
**characterized**
**in that** the connecting element (11, 12) is connected at one side to the measuring tube (3) by means of one weld seam (15, 16), and at the other side to the base body (2) or attaching element by means of a second weld seam (14).

5. Resiliently elastic measuring element according to one or more of Claims 1 to 4,
**characterized**
**in that** two weld seams (14, 15, 16) which run spatially separately from one another are provided.

6. Resiliently elastic measuring element according to one or more of Claims 1 to 5,
**characterized**
**in that** the connecting element (11, 12) is made out of the same material as the base body (2) or out of a welding filler material.

7. Resiliently elastic measuring element according to one or more of Claims 1 to 6,
**characterized**
**in that** the weld seams (14, 15, 16) can be produced by means of the action of a laser or electron beam.

8. Method for producing a connection between a measuring tube (3) and a base body (2) and/or attaching element of a resiliently elastic measuring element (1) according to one of Claims 1 to 7,
**characterized by**
the use of a weldable connecting element (11, 12) which, as a separate part, is connected to the measuring tube (3) by means of a weld seam, for example a weld seam produced by laser welding or electron beam welding, the weld seam (15, 16) being provided so as to extend through the connecting element (11, 12) to the end faces of the measuring tube (3), and the projecting edge region of the connecting element (11, 12) being connected to the base body (2) or attaching element by means of a second weld seam (14).

9. Method according to Claim 8,
**characterized by**
two weld seams (14, 15, 16) which run spatially separately from one another.

## Revendications

1. Elément de mesure ayant une élasticité comme un ressort, notamment pour un thermomètre, un commutateur à pression ou un manomètre, constitué d'un conduit (3) de mesure en forme d'arc ou de vis, qui est relié, notamment par soudure, à une extrémité à un corps (2) de base et à l'autre extrémité à un élément (10) de raccordement pour l'outil de mesure, **caractérisé en ce que** la liaison entre le conduit (3) de mesure et le corps (2) de base et/ou l'élément (10) de raccordement s'effectue par l'intermédiaire d'un élément (11, 12) de liaison pouvant être soudé, qui est relié, en tant que pièce détachée, au conduit (3) de mesure par un cordon de soudure, le cordon (15, 16) de soudure passant à travers l'élément (11, 12) de liaison jusqu'aux faces frontales du conduit (3) de mesure et la région de bord en saillie de l'élément (11, 12) de liaison étant reliée au moyen d'un deuxième cordon (14) de soudure au corps (2) de base ou à l'élément de raccordement.

2. Elément de mesure ayant une élasticité comme un ressort suivant la revendication 1, **caractérisé en ce que** l'élément (11, 12) de liaison est réalisé en tant que pièce détachée plate et à paroi mince.

3. Elément de mesure ayant une élasticité comme un ressort suivant la revendication 1 ou 2, **caractérisé en ce que** l'élément (11, 12) de liaison est adapté à la section transversale du conduit (3) de mesure dans une mesure telle qu'il est formé, au moins en partie, un bord faisant saillie, de préférence faisant le tour.

4. Elément de mesure ayant une élasticité comme un ressort suivant l'une ou plusieurs des revendications 1, 2 ou 3, **caractérisé en ce que** l'élément (11, 12) de liaison est relié d'une part par un cordon (15, 16) de soudure au conduit (3) de mesure et d'autre part par un deuxième cordon (14) de soudure, au corps (2) de base ou à l'élément de raccordement.

5. Elément de mesure ayant une élasticité comme un ressort suivant l'une ou plusieurs des revendications 1 à 4, **caractérisé en ce qu'**il est prévu deux cordons (14, 15, 16) de soudure s'étendant dans l'espace en étant séparés l'un de l'autre.

6. Elément de mesure ayant une élasticité comme un ressort suivant l'une ou plusieurs des revendications 1 à 5, **caractérisé en ce que** l'élément (11, 12) de liaison est en un matériau identique à celui du corps (2) de base ou en une matière d'additif de soudure.

7. Elément de mesure ayant une élasticité comme un ressort suivant l'une ou plusieurs des revendications 1 à 6, **caractérisé en ce** les cordons (14, 15, 16) de soudure peuvent être fabriqués par action d'un faisceau électronique ou d'un faisceau laser.

8. Procédé pour fabriquer une liaison entre un conduit (3) de mesure et un corps (2) de base et/ou un élément de raccordement d'un élément (1) de mesure ayant une élasticité comme un ressort suivant l'une des revendications 1 à 7, **caractérisé par** l'utilisation d'un élément (11, 12) de liaison pouvant être soudé, qui est relié, en tant que pièce détachée, par un cordon de soudure, par exemple par un cordon de soudure par faisceau électronique ou par soudure laser, au conduit (3) de mesure, le cordon (15, 16) de soudure étant réalisé en passant à travers l'élément (11, 12) de liaison jusqu'aux faces frontales avant du conduit (3) de mesure et la région de bord, qui fait saillie de l'élément (11, 12) de liaison, étant reliée au moyen d'un deuxième cordon (14) de soudure au corps (2) de base ou à l'élément de raccordement.

9. Procédé suivant la revendication 8, **caractérisé par** deux cordons (14, 15, 16) de soudure s'étendant en étant séparés l'un de l'autre dans l'espace.
